# EUROPÄISCHE PATENTANMELDUNG

(11) **EP 2 587 740 A2**
(43) Veröffentlichungstag der Anmeldung: **01.05.2013**
(21) Anmeldenummer: 13152545.3
(22) Anmeldetag: 02.09.2011
(51) Int. Cl.: H04L 12/423, H04L 12/42, H04L 12/43, H04J 3/06, H04J 3/08, H04L 29/12

(54) **Verfahren zum Übertragen von Daten zwischen Teilnehmern einer seriellen, ringförmigen Kommunikationsanordnung, wobei ein Protokoll zur Prioritätssteuerung vorgesehen ist, mit dem mindestens ein Slave über ein Datenpaket eine Anforderung an den Master überträgt, sowie entsprechende Kommunikationsanordnung**

(30) Priorität: 27.09.2010 DE 102010041427
(62) Teilanmeldung aus: 11179828.6
(71) Anmelder: ROBERT BOSCH GMBH, 70442 Stuttgart (DE)
(72) Erfinder: Rohatschek, Andreas-Juergen, 73249 Wernau/Neckar (DE); Lutz, Bernd, 71636 Ludwigsburg (DE); Thoss, Dieter, 71701 Schwieberdingen (DE); Huck, Thorsten, 71691 Freiberg (DE); Todorov, Stoyan, 68165 Mannheim (DE)

(57) **Zusammenfassung**

Die Erfindung betrifft ein Verfahren zum Übertragen von Daten zwischen Teilnehmern einer seriellen, ringförmigen Kommunikationsanordnung (2), in der die Teilnehmer miteinander seriell verbunden sind, wobei ein Datenpaket von einem als Master (4) ausgebildeten Teilnehmer an weitere Teilnehmer, die als Slaves (6, 8, 10) ausgebildet sind, übermittelt wird, wobei ein Protokoll zur Prioritätssteuerung vorgesehen ist, mit dem mindestens ein Slave (6, 8, 10) über ein Datenpaket (30, 50, 56, 62, 74) eine Anforderung an den Master (4) überträgt.

## Beschreibung

Die Erfindung betrifft ein Verfahren zum Übertragen von Daten zwischen Teilnehmern einer Kommunikationsanordnung und eine Kommunikationsanordnung.

### Stand der Technik

In vielen Netzwerken werden statt paralleler Schnittstellen häufiger serielle Schnittstellen verwendet. Gründe hierfür sind die Reduktion der Kosten für die Aufbau- und Verbindungstechnik, bspw. Anzahl der Pins, eine Vereinfachung des Systemdesigns und eine Skalierbarkeit der Bandbreite von Übertragungsdaten durch parallele Nutzung mehrerer serieller Schnittstellen.

Dieser Trend zeichnet sich insbesondere im Bereich der Unterhaltungselektronik (Consumer Electronics) mit einer Vielzahl an seriellen Schnittstellen-Standards ab. Diese werden meist zur Kommunikation mit Peripheriegeräten, z. B. Festplatte oder Display, eingesetzt. Abgesehen von der geringen Anzahl der Pins nutzen diese Schnittstellen jedoch komplexe Protokolle, die einen hohen Implementierungsaufwand erfordern. Zur Datenübertragung zwischen Logikbausteinen (ICs), bspw. auf dem Mainboard eines PCs oder innerhalb eines Handheld-Geräts, bündeln heutige Schnittstellen mehrere serielle Datenströme, bspw. PCI-Express oder Quickpath, und ermöglichen dadurch dem Systemdesigner eine Skalierbarkeit der Bandbreite.

Im Bereich der Kraftfahrzeugtechnik kommen zur Datenübertragung zwischen logischen Bausteinen, die als integrierte Schaltkreise (IC, Integrated Circuit) ausgebildet sein können, in Steuergeräten serielle Schnittstellen (SPI, Serial Peripheral Interface) zum Einsatz. Dieser Standard beschreibt eine bidirektionale, synchrone und serielle Datenübertragung zwischen einem als Master ausgebildeten Baustein und verschiedenen als Slaves ausgebildeten Bausteinen. Dabei umfasst eine Schnittstelle mindestens drei Leitungen zwischen dem Master und einem Slave, in der Regel sind dies zwei Datenleitungen und eine Taktleitung. Bei mehreren Slaves benötigt jeder dieser Bausteine eine zusätzliche Auswahl- bzw. Selektleitung vom Master. Die SPI-Schnittstelle ermöglicht die Umsetzung einer Daisy-Chain- oder Bustopologie.

In einigen Fällen ist die SPI-Schnittstelle nicht für die Übertragung zeitkritischer Ansteuersignale geeignet, um den Echtzeitanforderungen heutiger sicherheitskritischer Applikationen, z. B. ESP, gerecht zu werden. Häufig erfolgt mit einer SPI-Schnittstelle nur noch ein Austausch von Diagnose- und Statusinformationen. Zeitkritische Ansteuersignale werden in der Regel unter der Nutzung von Timer-Einheiten und/oder proprietären Schnittstellen mit hohem Aufwand an die Ansteuerbausteine der Aktoren und/oder von den Auswerteschaltungen der Sensoren übertragen.

In der Anwendung der SPI-Schnittstelle in Form einer Bustopologie ergeben sich bei höheren Datenraten zunehmend schlechtere Signalintegritäten und hohe Störbeeinflussungen aufgrund schlechter EMV-Eigenschaften. Weiter wird nur das Sendesignal mit dem Taktsignal synchron übertragen, während sich die phasensynchrone Übertragung des Empfangssignals durch die internen Verzögerungszeiten im Slave bei hohen Datenraten zunehmend schwieriger gestalten und Fehler in der Datenübertragung hervorrufen können.

In der Anwendung der SPI-Schnittstelle in einer Daisy-Chain-Topologie, d. h. Ringtopologie, entstehen sehr hohe Latenzzeiten, weswegen diese Form heutzutage nicht effizient in Kfz-Steuergeräten genutzt werden kann.

Ein Verfahren zur Realisierung einer Kommunikation in einem Ringbus ist ferner aus der Druckschrift GB 2 188 216 A bekannt. Die zwischen Teilnehmern des Ringbusses versendeten Nachrichten weisen sogenannte Header auf, die eine Vielzahl von Ziffern umfassen, die eine Verfügbarkeit des Ringbusses anzeigen. Weiterhin ist ein Schieberegister vorgesehen, dessen maximale Verzögerung eine Anzahl von Bits in dem Header repräsentiert, wobei eine Kontrolleinrichtung Daten in dem Header einer Botschaft manipulieren kann.

Ein Verfahren zur Übertragung eines Berechtigungszeichens in einem Nachrichtenring ist in der Druckschrift DE 37 88 604 T2 beschrieben. Dabei wird ein Prioritätsniveau dieses Berechtigungszeichens in einem Nachrichtenring mit einer Mehrzahl von Stationen aktualisiert. Es ist vorgesehen, dass jeder jeweilige Bereich Prioritätsniveaus von Paketen entspricht, die durch jede jeweilige Station übertragen werden müssen, wobei das Berechtigungszeichen des Nachrichtenrings von einer ersten Station des Nachrichtenrings dann übertragen wird, sobald eine erste Station einen Rahmen, der ein zu übertragendes Paket enthält, überträgt.

Aus der Druckschrift DE 198 03 686 A1 sind ein Verfahren und eine Vorrichtung zur Kommunikation von bspw. gleichberechtigten Stationen eines ringförmigen, seriellen Lichtwellenleiter-Busses bekannt. Dabei werden von den Stationen zeitzyklische Containertelegramme erzeugt, adressiert und auf den seriellen Bus gegeben.

### Offenbarung der Erfindung

Vor diesem Hintergrund werden ein Verfahren und eine Kommunikationsanordnung mit den Merkmalen der unabhängigen Patentansprüche vorgestellt. Weitere Ausgestaltungen der Erfindung ergeben sich aus den abhängigen Patentansprüchen und der Beschreibung.

Bei dem Verfahren erfolgt eine serielle Verbindung von Teilnehmern und somit Knoten einer seriellen, in Ausgestaltung ringförmigen Kommunikationsanordnung. Darin kann eine Datenübertragung von Teilnehmer zu Teilnehmer mit einer Verzögerung von mindestens einer Bitdauer erfolgen, wodurch Datenpakete, die Nachrichten enthalten können, zwischen den Teilnehmern mit sehr geringer Latenz übertragen werden können. Die beschriebene Kommunikationsanordnung ist in Ausgestaltung als synchrones, bidirektionales Kommunikationssystem bzw. synchrone, bidirektionale Kommunikationsanordnung ausgebildet, wobei ein Austausch von Daten durch eine Ring-Topologie, die für eine Ausgestaltung der Kommunikationsanordnung vorgesehen ist, erfolgt. Mit einem Datensignal bzw. einem Signal wird mindestens ein Datenpaket, das eine Taktinformation umfasst, übertragen. Die Kommunikationsanordnung entspricht in einer Ausführungsform einem ringförmigen Netzwerk, in dem die Teilnehmer miteinander ringförmig und seriell verbunden sein können. Eine derartige Kommunikationsanordnung kann auch als Ring bezeichnet werden.

Dabei können einheitliche Adressen für alle Teilnehmer, bspw. "00....0", vergeben sein, d. h. es ist keine Konfiguration der Slaves erforderlich. Jeder Slave modifiziert, bspw. subtrahiert oder addiert, einen festen Wert von einem Adresswert eines empfangenen Datenrahmens, der eine Nachricht umfasst. Üblicherweise muss die Position aller als Slaves ausgebildeten Teilnehmer innerhalb der Kommunikationsanordnung nur dem als Master ausgebildeten Teilnehmer bekannt sein.

Es kann bei einer Ausführung der Erfindung vorgesehen sein, dass eine Übertragung eines Systemtakts auf eine Schnittstelle der Kommunikationsanordnung durch kontinuierliche Datenübertragung, d. h. kontinuierliche Synchronisation, durch ein Taktrückgewinnungsmodul in den Slaves erfolgt. Weiterhin können nach einer festen Anzahl an Datenbits sog. Stuffing-Bits eingefügt werden, wodurch eine Taktrückgewinnung in den Slaves sichergestellt werden kann. Anstelle der Stuffing-Bits, die nur der Taktrückgewinnung dienen, können auch Bits zur Überprüfung der Parität eingefügt werden. Durch eine geeignete Wahl von Paritätsbits kann sichergestellt werden, dass innerhalb einer festgelegten Zeitdauer mindestens ein Flankenwechsel im Bitstrom enthalten ist. Alternativ können auch weitere Kodierverfahren aus dem Stand der Technik zur Taktrückgewinnung genutzt werden.

Die vom Master versendeten bzw. zwischen den Teilnehmern ausgetauschten Datenrahmen oder Leerrahmen werden durch eine spezielle Reihenfolge von Bits eines sog. Zwischenrahmensymbols voneinander getrennt. Da typischerweise das Datensignal kodiert übertragen wird, um eine Taktrückgewinnung zu ermöglichen, entspricht das Zwischenrahmensymbol typischerweise einem speziellen "unerlaubten" Signal, das keiner Datenbitfolge entspricht. In einer weiteren Ausführungsform kann das Zwischenrahmensymbol auch als eine Folge von Nullen oder Einsen ausgeführt sein kann. Durch das Ausmessen des Zwischenrahmensymbols, d. h. in diesem Fall einer Zeitdauer ohne Flankenwechsel, wobei diese Zeitdauer von der Anzahl der Nullen und/oder Einsen abhängt, kann ein Slave die Geschwindigkeit der Datenübertragung ermitteln und eine grobe Taktrückgewinnung vornehmen. Durch das Einfügen von Stuffing-Bits oder Paritätsbits wird im Datenpaket nach einer bestimmten Anzahl an Bits ein Flankenwechsel hervorgerufen, wodurch sichergestellt ist, dass ausschließlich das Zwischenrahmensymbol über die maximale Länge an Nullen oder Einsen verfügt und es sich somit um eine eindeutige Bitfolge zur Synchronisation handelt. Alternativ kann ein Zwischenrahmensymbol auch eine andere beliebige, den Slaves bekannte, Bitfolge sein, die beispielweise für eine spektrale Spreizung im Frequenzbereich sorgt.

Über das Zwischenrahmensymbol kann u. a. die Polarität der Signalübertragung ermittelt werden. So können bspw. die beiden Leitungen zwischen zwei Teilnehmern bei einer differentiellen Übertragung entsprechend einer optimalen Ausgestaltung des Layouts, bspw. zur Vermeidung von Kreuzungen in der Leiterbahnführung der Kommunikationsverbindungen, verlegt und auf der Leiterplatte an die integrierten Schaltkreise (ICs) mit beliebiger Polarität angeschlossen werden. Vorteilhaft ist, dass bei geeigneter Wahl der Kodierung, bspw. durch das Verfahren nach Miller oder der Modified Frequency Modulation, die Rückgewinnung der Informationen nur auf die zeitliche Position der Flanken sensitiv ist, d. h. nicht pegelsensitiv, wodurch die Polarität des Datensignals ohnehin beliebig ist.

Um im Leerlauf des Masters, d. h. dieser hat keine zu versendende Botschaften vorliegen, Informationen und/oder Unterbrechungsanfragen von den Slaves empfangen zu können, sendet der Master kontinuierlich sog. Leerrahmen. Durch das Versenden der Leerrahmen, die auch als Idleframes bezeichnet werden, erfolgt somit eine Abfrage (Polling) der Slaves. Jeder Slave kann einen Leerrahmen belegen und seine Daten und/oder wenigstens eine Anforderung als sog. "Soft-Interrupt" und somit als Unterbrechung der Software, bspw. von einem Second-Level Interrupt Handler (SLIH), d. h. einem Steuerungsprogramm für eine Unterbrechung einer zweiten Schicht nach dem OSI-Schichtenmodell an den Master, als Antwort auf die Abfrage übertragen. Ferner kann die Schnittstelle des Masters soweit automatisiert sein, dass durch entsprechende Verfahren die direkt empfangenen und/oder bei den Slaves abzurufenden Daten direkt in den Speicher des Masters geschrieben werden.

Die physikalische Schicht (Physical Layer) der seriellen Schnittstelle eines Teilnehmers umfasst Punkt-zu-Punkt-Verbindungen im Simplex-Betrieb, bei dem ein Transfer von Daten in nur einer Richtung erfolgt. Diese Verbindungen können elektrisch asymmetrisch, z. B. über CMOS-Pegel, elektrisch symmetrisch, z. B. über eine differentielle LVDS-Signalübertragung oder auch optisch sein. Ferner kann die Übertragung auch mit Hilfe eines Modulationsverfahrens, bspw. zur Mehrfachnutzung von Signal- und/oder Versorgungsleitungen, ausgeführt sein.

Das Verfahren erlaubt in weiterer Ausgestaltung die Regenerierung des Signals in jedem Slave, so dass das Signal jeweils nur eine kurze Distanz überbrücken muss. Dadurch wird der technische Aufwand trotz hoher Übertragungsrate zusätzlich reduziert.

Weiterhin erlaubt das Verfahren typischerweise den Anschluss beliebig vieler Slaves. Die Anzahl der Slaves ist durch den Adressraum und somit eine Größe des Adressfelds begrenzt. Das Hinzufügen weiterer Slaves hat keinen Einfluss auf die elektrischen Eigenschaften, bspw. die Signalqualität, oder das EMV-Verhalten bzw. die elektromagnetische Verträglichkeit der Kommunikationsanordnung.

Durch das Verfahren kann implizit sichergestellt werden, dass alle Slaves, mindestens hinsichtlich ihrer Schnittstelle zur Kommunikation und der Taktversorgung, funktionsfähig sind.

In vorteilhafter Ausgestaltung kann für die Datenübertragung zwischen einem Mikrocontroller und einer anwendungsspezifischen integrierten Schaltung (ASIC) innerhalb eines als Kfz-Steuergerät ausgebildeten Geräts für ein Kraftfahrzeug erfolgen. Eine serielle Schnittstelle für mindestens einen Teilnehmer, der in diesem Fall einem Gerät entspricht und/oder einem derartigen Gerät zugeordnet ist, wird im Rahmen des Verfahrens definiert. Mit dieser Schnittstelle können zumindest einzelne Schritte des beschriebenen Verfahrens ausgeführt werden. Üblicherweise können die beschriebene Kommunikationsanordnung sowie das beschriebene Verfahren für Geräte und somit für Teilnehmer in unterschiedlichen elektromechanischen Einrichtungen verwendet werden, falls für diese eine Übertragung von Daten vorgesehen ist.

Mit der Erfindung wird in einer Ausführungsform für eine Kommunikationsanordnung, die bspw. eine Ringstruktur aufweist, ein Adressierungskonzept für Teilnehmer bereitgestellt, wobei bei einer Weiterleitung eines Datenpakets von einem Teilnehmer zu einem nächsten Teilnehmer eine Verzögerung, um mindestens eine Bitdauer, erfolgt.

Somit können mit der Erfindung eine Kommunikationsanordnung und ein Verfahren zur seriellen Datenübertragung zwischen Teilnehmern, die als Logikbausteine innerhalb eines Steuergeräts ausgebildet sein können, bereitgestellt werden. Als Teilnehmer sind mindestens ein diskreter Logikbaustein (ASIC) als Slaves und ein Logikbaustein (Mikrocontroller) als Master zur Kontrolle bzw. Steuerung und/oder Regelung mindestens eines Slaves vorgesehen. Dabei wird eine einfache und kostengünstige Implementierung auf Logikbausteinen, d. h. Mikrocontrollern und/oder ASICs, mit hohen Datenraten ermöglicht, wobei eine derartige Implementierung mit wenigen Verbindungsleitungen auf einer Leiterplatte und wenigen Pins des Logikbausteins, d. h. geringen Kosten der Aufbau- und Verbindungstechnik, realisierbar ist. Weiterhin kann das Verfahren eine Übertragung höherer Datenraten als bei der für Kfz-Anwendungen typischen SPI-Schnittstelle ermöglichen. Durch das im Datensignal kodierte Taktsignal ist eine phasensynchrone Übertragung unabhängig von der Leitungsführung und den Verzögerungszeiten gewährleistet.

Die Teilnehmer sind in der Kommunikationsanordnung üblicherweise in Form einer Ring-Topologie angeordnet, wodurch die Teilnehmer durch Punkt-zu-Punkt-Verbindungen mit einer minimalen Anzahl an Pins verbunden sein können. In der Ring-Topologie bestimmt der langsamste Teilnehmer die Busgeschwindigkeit. Gegebenenfalls kann eine Zusammenfassung bzw. Gruppierung von Teilnehmern in unterschiedlichen Ringen erfolgen, wobei in jedem dieser Ringe als eine für sich abgeschlossene Ausführungsform einer erfindungsgemäßen Kommunikationsanordnung eine Ausführungsform des erfindungsgemäßen Verfahrens durchgeführt werden kann. Sind mehrere Funktionsgruppen in einem Steuergerät integriert, bspw. ein Mikrocontroller kommuniziert mit mindestens einem ASIC unterschiedlicher Funktionseinheiten, so nutzen die jeweiligen Funktionsgruppen typischerweise jeweils eine separate Ringanordung.

Der Mikrocontroller agiert in der Regel als Master, wodurch keine Busarbitrierung erforderlich wird. Somit kann der Master entsprechend des heutigen SPI-Protokolls, das ebenfalls ein Master-Slave-Konzept ist, die Slaves über ein sog. Polling zyklisch abfragen.

Entsprechend dem SPI-Standard kann eine synchrone Datenübertragung erfolgen. Allerdings sind für Daten und Takt keine separaten Leitungen erforderlich. Die vorgesehene Schnittstelle sieht eine kodierte Übertragung des Takts innerhalb des Datensignals vor, bspw. eine 8B/10B-Kodierung, Manchestercodierung oder Millercodierung bzw. Modified Frequency Modulation. Folglich sind für niedrige Datenraten nur zwei Pins pro Teilnehmer mit je einer Leitung zum vorgehenden und nachfolgenden Teilnehmer vorgesehen. Hohe Datenraten sehen eine differentielle Übertragung mit vier Pins pro Teilnehmer mit je zwei Leitungen zum vorgehenden und nachfolgenden Teilnehmer vor. Durch die kodierte Übertragung der Taktinformation kann neben der Reduktion der Kosten auch ermöglicht werden, dass es zu keinen Verzögerungen zwischen Takt und Daten auf einer Übertragungsstrecke zwischen den Teilnehmern kommt. Ein Systemtakt wird durch den Master vorgegeben und alle Slaves synchronisieren sich mittels eigener, lokaler Taktrückgewinnungsmodule, bspw. durch eine Phasenregelschleife oder mittels einer Überabtastung mit entsprechender Synchronisation auf das Nachrichtensignal.

Während der Initialisierung zu Beginn einer Übertragung sendet der Master ausgehend von einer ersten Schnittstelle, von der aus Datenpakete versendet werden, ein Synchronisationssignal an den ersten Slave in der bspw. als Ring ausgebildeten Kommunikationsanordnung. Sobald der Systemtakt des ersten Slave, d. h. Empfänger, in Phase mit dem Master ist, beginnt die Weiterleitung des Synchronisationssignals an den nächsten Slave. Hierbei erfolgt eine Übermittlung von Datenpaketen zwischen Schnittstellen benachbarter Teilnehmer. Dieses Vorgehen setzt sich durch die gesamte Kommunikationsanordnung fort. Nachdem die Synchronisation aller Slaves in der bspw. als Ring ausgebildeten Kommunikationsanordnung erfolgt ist, kann auch ein Empfänger im Master, üblicherweise eine zweite Schnittstelle, mit der Datenpakte empfangen werden, adaptiert werden. Aufgrund der im Master unbekannten Verzögerung bei der Übertragung von Datenrahmen oder Leerrahmen durch den Ring und des damit verbundenen Phasenoffsets zum eignen Systemtakt wird in einem letzten Schritt der Initialisierung auch im Master eine Phasennachführung vorgenommen. Nachdem auch die Phase im Empfänger des Masters nachgeführt ist, sind alle Teilnehmer in Phase und können nun Datenpakete synchron übertragen.

Um Frequenzschwankungen der Taktrückgewinnungsmodule in den Slaves durch ständiges Neu-Synchronisieren zu vermeiden, kann eine kontinuierliche Übertragung von Daten und somit von Datenpaketen bei einem sog. Dauerbetrieb zum Einsatz kommen. Hierdurch entfällt zunächst der Überhang für Synchronisationsmuster zu Beginn eines Datenpakets, der bei einer paketorientierten Übertragung (sog. Burst Transmission Mode) im Gegensatz zur kontinuierlichen Übertragung (sog. Continuous Transmission Mode) erforderlich ist. Durch die Möglichkeit der kontinuierlichen Synchronisation benötigen die Slaves auch keinen weiteren Systemtakt, der bei bekannten Systemen in der Regel neben der Kommunikationsschnittstelle zusätzlich zugeführt werden muss. Folglich können weitere Leitungen und Pins eingespart werden. Optional sieht der Dauerbetrieb den Einsatz eines Spread-Spectrum-Verfahrens bzw. eine spektrale Spreizung zur Verbesserung der EMV-Eigenschaften vor. Ferner ist auch die Anwendung einer paketorientierten Übertragung (sog. Burst Transmission Mode) möglich, wenngleich hierdurch möglicherweise eine zusätzliche Leitung für die Übertragung des Systemtakts vom Master an die Slaves erforderlich wird.

In weiterer Ausgestaltung weisen die an der Kommunikation beteiligten Teilnehmer Schieberegister auf. Dabei erfolgt eine automatische Taktung der Schieberegister, wobei mittels eines Taktrückgewinnungsmoduls ein Takt zur Zeitbasis des Masters, der als Mikrocontroller ausgebildet ist, zurückgewonnen wird. Das Schieberegister überträgt mit einem Taktsignal dieses Takts automatisch die Daten. Da die Bits einzeln verarbeitet werden können, kann die minimale Latenzzeit von einer Bitdauer je Teilnehmer erreicht werden. Latenzzeiten, die sich ergeben, bis ein Datenpaket mit einer Nachricht durch den Ring übertragen ist, sind somit gering, wodurch die Echtzeitfähigkeit der Kommunikationsanordnung sichergestellt werden kann. Durch die minimale Verzögerung der Nachricht um mindestens einen Takt erfolgt in jedem Teilnehmer zudem eine Signalaufbereitung, d. h. ein sog. Bit-Reshaping, das pegel- und/oder zeitbezogen wirken kann.

Im Rahmen der Erfindung erfolgt die Adressierung der Teilnehmer nicht über ein separates Auswahl-Signal, sondern durch eine Adressierung innerhalb eines als Datenrahmen oder Leerrahmen ausgebildeten Datenpakets. Um das Adressfeld im kontinuierlichen Datenstrom zu detektieren, wird das Zwischenrahmensymbol, das in Ausgestaltung einem Anfangssymbol sowie einem Endsymbol eines Datenpakets entspricht, eingefügt.

Das Zwischenrahmensymbol kann auch als Präambel eines Datenrahmens betrachtet werden, womit sich die Slaves auf die bevorstehenden Daten synchronisieren können. Hierüber erfolgt eine Synchronisation des Rahmens, da jedem Teilnehmer bekannt ist, dass nach dem Zwischenrahmensymbol stets Daten übertragen werden. Das Zwischenrahmensymbol kann auch zur Umsetzung variabler Datenlängen verwendet werden.

Der Master kann die Slaves über die Adressierung ansprechen und über entsprechende Befehle Daten schreiben oder lesen. Durch ein Reservierungszeichen, d. h. eine Bitinformation, kann direkt nach dem Zwischenrahmensymbol signalisiert werden, ob das Frame (Rahmen) mit Nutzdaten belegt ist und nur der adressierte Teilnehmer den Datenrahmen bearbeiten darf. Dieses dedizierte Bit wird üblicherweise als Reservierungszeichen bezeichnet, wobei durch dieses Reservierungszeichen signalisiert wird, ob das Datenpaket einen Datenrahmen oder einen Leerrahmen umfasst.

In einer möglichen Ausgestaltung der Erfindung addiert oder subtrahiert jeder Slave von einem Adresswert der Adresse eines empfangenen Datenpakets einen festen Wert. Dabei wird bei der Adressierung eines Teilnehmers die Ring-Topologie der Kommunikationsanordnung, die als ringförmiges Netzwerk ausgebildet sein kann, dahingehend verwendet, dass jeder Teilnehmer von der aktuellen Adresse "1" addiert oder subtrahiert, wodurch bei einer Adresse "000...0", die lediglich Nullen enthält, ein gewünschter Teilnehmer adressiert sein kann. Bei einer Ausführung des Verfahrens sind alle Teilnehmer, üblicherweise alle Slaves, auf eine identische Adresse sensitiv. Diese Subtraktion oder Addition erfolgt typischerweise nur, wenn das Datenframe Nutzdaten beinhaltet, d. h. das Reservierungszeichen nach dem Zwischenrahmensymbol gesetzt ist. Die Realisierung erfolgt üblicherweise durch einen 1-Bit-Subtrahierer, indem die Adresse LSB-First, d. h. die Adresse des ersten niedrigstwertigen Bit (least significant bit), übertragen wird.

Ist ein Adresswert einer empfangenen Adresse "000...0", sind die nachfolgenden Daten für den aktuellen Slave bestimmt und werden von diesem bearbeitet. Zudem wird der Adresswert des Adressfelds im Datenrahmen durch das beschriebene Vorgehen, d. h. Subtraktion um "1", durch einen Überlauf automatisch auf "111...1" gesetzt, was sicherstellt, dass dieses Datenpaket als Botschaft bis zum Master weitergereicht wird und bspw. ein Acknowledge bzw. eine Bestätigung über den korrekten Empfang der Botschaft oder direkt eine Antwort enthalten kann. Dieses Datenpaket wird an einen nächsten Teilnehmer innerhalb der Kommunikationsanordnung weitergeleitet. Dabei wird von allen nachfolgenden Slaves für den neu gesetzten Adresswert eine Modifikation, bspw. eine Subtraktion oder Addition, vorgenommen. Durch das automatische Setzen des Adresswerts im Adressfeld des Datenrahmens auf den höchsten Wert im Slave kann von dem Master nachvollzogen werden, von welchem Slave die Botschaft gesendet wurde, da der Master aufgrund der Struktur des Adresswerts nachvollziehen kann, wie viele Modifikationen bzw. Änderungen für den gesetzten Adresswert vorgenommen wurden, wobei die Anzahl der vorgenommenen Modifikationen der Anzahl der Slaves entspricht, die das Datenpaket nach dem Setzen des Adresswerts durch einen Slave empfangen und weitergeleitet haben.

Mit der beschriebenen Schnittstelle kann eine Umschaltung zwischen unterschiedlichen Rahmenlängen durchgeführt werden. Sofern eine feste Rahmenlänge gewählt wird, können unter Umständen kleine Datenpakete in einem gro-βen Rahmen übertragen werden. Hierbei ist ein Auffüllen des Datenrahmens mit Blinddaten erforderlich. Ebenso ist eine variable Rahmenlänge umsetzbar, wobei die Länge der Schieberegister in den Slaves unabhängig voneinander sein kann, da die irrelevanten Datenrahmen jeweils nur durchgereicht werden.

Im Fall von variablen Rahmenlängen können die Slaves über einen Leerrahmen dem Master mit einer Anforderung signalisieren, dass von dem Slave Nutzdaten zu übertragen sind, wonach diese anschließend von dem Master durch Versenden eines Datenrahmens passender Länge abgeholt werden.

Sofern von dem Slave ohne Anforderung vom Master Daten an den Master zu übermitteln sind, kann der Slave einen vom Master gesendeten Leerrahmen belegen. Hierzu wird ein Bit nach dem Zwischenrahmensymbol, ein sog. Reservierungszeichen, gesetzt. Der Adresswert im Adressfeld des Datenrahmens wird üblicherweise von dem Slave, der den Leerrahmen belegt, auf den höchsten Wert gesetzt ("111....1"). Dies kann derart erfolgen, dass der Adresswert im Leerrahmen vom Slave auf "111...1" gesetzt wird und durch Subtraktion oder Addition der Adresse im Adressfeld des Datenrahmens in jedem Slave an den Master übermittelt wird. Das Setzen der Adresse auf den Wert "111...1" kann bspw. durch eine ODER-Verknüpfung erfolgen, indem sämtlicher Adressbits mit einer "1" überschrieben werden. Der Master kann auch in diesem Fall anhand der Anzahl der Modifikationen des Adressfelds, die durch Slaves vorgenommen werden, nachvollziehen, von welchem Slave der Leerrahmen belegt und der Adresswert für das Adressfeld neu gesetzt wurde. Mit dieser Realisierung kann das Adressfeld im Datenrahmen oder Leerrahmen beim Versenden durch den Master Zufallsdaten enthalten, wodurch eine spektrale Spreizung erfolgen und damit bessere EMV-Eigenschaften erzielt werden können. In einer weiteren Ausgestaltung der Schnittstelle kann ein Leerrahmen auch noch ein Nutzdatenfeld enthalten, was einem Slave die direkte Übertragung von Daten, die die durch den Leerrahmen vorgegebene Datenlänge nicht überschreiten, ermöglicht.

Enthält die Ausgestaltung der Leerrahmen kein Nutzdatenfeld, kann der Slave nur einen Interrupt bzw. eine Unterbrechung, bspw. einen Soft-Interrupt, an den Master senden und darauf warten, dass der Master einen passenden Datenrahmen in einem nächsten Umlauf an den Slave schickt. Dieser Datenrahmen ist mit einem gesetzten Reservierungszeichen und der Adresse des Slaves versehen. Im Inhalt des Datenrahmens kann nun bspw. nochmals der Befehl zum Auslesen eines Register stehen, wonach der Slave im Anschluss die vorhandene Information in den Datenrahmen oder insbesondere in den Leerrahmen kopiert. Sofern nun aber ein Leerrahmen ein Nutzdatenfeld aufweist, kann der Slave die zu übertragenden Daten, sofern diese die Länge des Datenfelds des Leerrahmens nicht überschreiten, direkt anhängen.

Um bei dieser Variante der Kommunikation eine Signalisierung auszulösen, erfolgt eine Priorisierung eines Slaves anhand der Position des Slaves in der Kommunikationsanordnung. Dabei kann in einer Ausgestaltung der Schnittstelle ein Slave über das Setzen eines ihm zugeordneten Bits eine Signalisierung an den Master übermitteln. Somit kann diese Randbedingung aber zu starken Einschränkungen im Layout bzw. der Gestaltung der Leiterplatte führen. Um dies zu vermeiden, folgt nach dem Zwischenrahmensymbol und dem Reservierungszeichen nun entsprechend der Anzahl an Slaves als Teilnehmer in der Kommunikationsanordnung eine Anzahl an Bits, die mindestens so groß wie die Anzahl der Teilnehmer, in der Regel der Anzahl der Slaves, in der Kommunikationsanordnung ist, welche einen Interrupt auslösen können. Teilnehmer, welche nur Daten vom Master empfangen und keine Botschaften an diesen liefern, besitzen demnach keine Interrupt-Fähigkeit und ignorieren folglich die Leerrahmen. Somit braucht für diese Art von Teilnehmern auch kein Interrupt-Bit im Leerrahmen vorgehalten werden. Sofern durch einen interruptfähigen Teilnehmer ein Interrupt ausgelöst werden soll, setzt dieser Teilnehmer das ihm zugeordnete Bit. Die Priorisierung der Abarbeitung der Interrupts kann nun im Master (Mikrocontroller) erfolgen.

Eine Variante, bei der eine Zuordnung eines festen Bits vorgesehen ist, erfordert die Kenntnis im Slave über dessen Position in der Kommunikationsanordnung und/oder die Kenntnis eines ihm in einem Leerrahmen zugeordneten Bits. In einer anderen Ausgestaltung der Schnittstelle wird einem Slave kein festes Bit zugeordnet. Stattdessen wird die Bitfolge des Leerrahmens nach dem Reservierungszeichen von jedem Slave um eine Position verschoben und ein neues Bit eingefügt. Hierbei geht jeweils die Information des letzten Bits verloren. Dies stellt jedoch keine Einschränkung dar, da zu Beginn der Übertragung, d. h. dem Versenden des Leerrahmens durch den Master, ein Leerrahmen keine Information trägt und die Anzahl der darin vorgehaltenen Bits mindestens genauso groß wie die Anzahl der Slaves der Kommunikationsanordnung, die eine Unterbrechungsanfrage absetzten können, ist. Sofern ein Unterbrechungsanfrage bzw. ein Zeichen für bereitstehende Daten auszulösen ist, kann das durch den Slave eingefügt Bit gesetzt werden. So ist in jedem Slave der identische Algorithmus hinterlegt und der Master kann aufgrund der Kenntnis der Position der Teilnehmer in der Kommunikationsanordnung die Unterbrechungsanfragen entsprechend zuordnen und gemäß der gewünschten Priorisierung verarbeiten.

Eine Fehlerkorrektur kann in einer weiteren Ausgestaltung ebenfalls hinzugefügt werden. Falls eine Kommunikationsanordnung ringförmig ausgebildet ist, kann diese aufgrund der Ring-Topologie so ausgelegt werden, dass der Master nach der Übertragung durch den Ring die empfangene Botschaft mit der von ihm ursprünglich gesendeten Botschaft vergleicht und somit auf eine fehlerfreie bzw. fehlerhafte Übertragung schließen kann. In der Regel wird die Antwort auf eine Anfrage von den Slaves direkt an den Master geschickt, um eine bessere Auslastung des Systems zu gewährleisten. Alternativ kann die Antwort des Slaves auch erst mit dem nächstfolgenden an ihn adressierten Datenpaket erfolgen, entsprechend heutiger Ausgestaltungen einer SPI-Kommunikation. Optional kann eine zyklische Redundanzprüfung (Cyclic Redundancy Check, CRC) als Prüfsummenverfahren durchgeführt oder eine Paritätsprüfung im Datenrahmen hinzugefügt werden und der empfangende Teilnehmer am Ende seiner Antwort einen Empfang quittieren (Acknowledge). Desweiteren ist es optional möglich, auch dem Adressfeld des Datenrahmens Parity-Bits hinzuzufügen.

Wahlweise kann die Übertragung der Daten derart erfolgen, dass eine Botschaft mit Daten, die üblicherweise in einem Datenrahmen bereitgestellt und ausgehend vom Sender, d. h. dem Master, komplett durch den Ring übertragen wird, im Master wieder dekodiert wird, bevor das Senden des nächsten Datenrahmens erfolgt. Alternativ kann auch ein kontinuierlicher Bitstrom an Daten gewählt werden, d. h. das Senden des nächsten Datenrahmens erfolgt direkt im Anschluss und nicht erst nach Empfang der vorherigen Botschaft. In diesem Fall wird im Protokoll durch Arbitrierung sichergestellt, dass ein Soft-Interrupt eines Slaves bei überschneidender Adressierung durch den Master, d. h. der Master spricht den Slave an, noch bevor der Soft-Interrupt des Slaves verarbeitet wurde, korrekt bearbeitet wird. Dieses Szenario ist zulässig und hat keinen Einfluss auf die Ausgestaltung der beschriebenen Bitübertragungsschicht.

Im Falle des kontinuierlichen Datenstroms kann die Länge des Zwischenrahmensymbols bspw. auch der Anzahl der Teilnehmer, in der Regel der Anzahl der Slaves, einer in Ausgestaltung ringförmigen Kommunikationsanordnung entsprechen. Aufgrund der Verzögerung je Teilnehmer von typischerweise einer Bitdauer entspricht die Dauer der Übertragung durch den Ring nun genau der Sendedauer eines Zwischenrahmensymbols. Die Länge des Zwischenrahmensymbols bzw. die zeitliche Dauer des Versendens des Zwischenrahmensymbols wird somit entsprechend der Verzögerungszeit der Übertragung durch den Ring gewählt. Somit wird ein kontinuierlicher Datenstrom bereitgestellt, was sich bspw. positiv auf die Synchronisation der Slaves auswirkt. Zugleich kann der Master die im Umlauf befindliche Botschaft vor dem Senden des nächsten Datenrahmens dekodieren. Somit ist eine schnelle Reaktion auf eingehende Soft-Interrupts möglich, es kommt zu keiner Überschneidung zwischen dem Absetzen einer Unterbrechungsanfrage durch den Slave und der Reaktion auf eine Anfrage durch den Master.

Optional erfolgt eine Implementierung eines zusätzlichen Logikmoduls im Master, um die empfangenen Daten, z. B. Sensordaten, direkt in einen Speicher zu schreiben. Desweiteren kann das Polling der Slaves automatisiert werden. Hierdurch erfolgt eine Reduktion der Software-Interaktion, was zu einer Entlastung der zentralen Recheneinheit (CPU) führt. Weiter können die Register der ASICs (Slaves) im Speicher des Mikrocontrollers (Master) transparent abgelegt werden. Mögliche HW-Module sind aus dem Stand der Technik als DMA, Transfer Units oder auch Message Boxen bekannt.

Neben den bereits erwähnten Verfahren der spektralen Spreizung gibt es die Option, einen blocksynchronisierten Verwürfler zu verwenden. Beim blocksynchronisierten Verwürfler wird zu den Daten im sendenden und empfangenden Teilnehmer gleichzeitig dieselbe m-Sequenz modulo-2-addiert.

Eine im Rahmen der Erfindung vorgesehene Schnittstelle für einen Teilnehmer kann für Anwendungen im Kfz-Bereich eingesetzt werden. Entsprechend den bekannten Standards wie IIC (Inter-Integrated Circuit) und SPI (Serial Peripheral Interface) ist die genannte Schnittstelle ebenfalls universell einsetzbar und demnach nicht auf einen Einsatz im automotiven Bereich oder gar in Steuergeräten (ECUs) beschränkt.

Die erfindungsgemäße Kommunikationsanordnung ist dazu ausgebildet, sämtliche Schritte des vorgestellten Verfahrens durchzuführen. Dabei können einzelne Schritte dieses Verfahrens auch von einzelnen Komponenten, üblicherweise von Teilnehmern, der Kommunikationsanordnung durchgeführt werden. Weiterhin können Funktionen der Kommunikationsanordnung oder Funktionen von einzelnen Komponenten der Kommunikationsanordnung als Schritte des Verfahrens umgesetzt werden. Außerdem ist es möglich, dass Schritte des Verfahrens als Funktionen wenigstens einer Komponente der Kommunikationsanordnung oder der gesamten Kommunikationsanordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

### Ausführungsformen der Erfindung

- Figur 1: zeigt in schematischer Darstellung eine Ausführungsform einer erfindungsgemäßen Kommunikationsanordnung.
- Figur 2: zeigt in schematischer Darstellung ein Beispiel für eine Struktur eines Datenpakets mit einem Datenrahmen, wie er bei einer Ausführungsform des erfindungsgemäßen Verfahrens verwendet wird.
- Figur 3: zeigt Beispiele für Datenpakete mit Leerrahmen, wie sie bei verschiedenen Ausführungsformen des erfindungsgemäßen Verfahrens verwendet werden.
- Figur 4: zeigt ein Flussdiagramm zu einer weiteren Ausführungsform des erfindungsgemäßen Verfahrens, wobei eine Verarbeitung einer Adressierung eines Slaves erfolgt.
- Figur 5: zeigt in schematischer Darstellung ein Blockschaltbild eines blocksynchronisierten Verwürflers, wie er bei einer weiteren Ausführungsform des erfindungsgemäßen Verfahrens verwendet wird.

Die Erfindung ist anhand Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

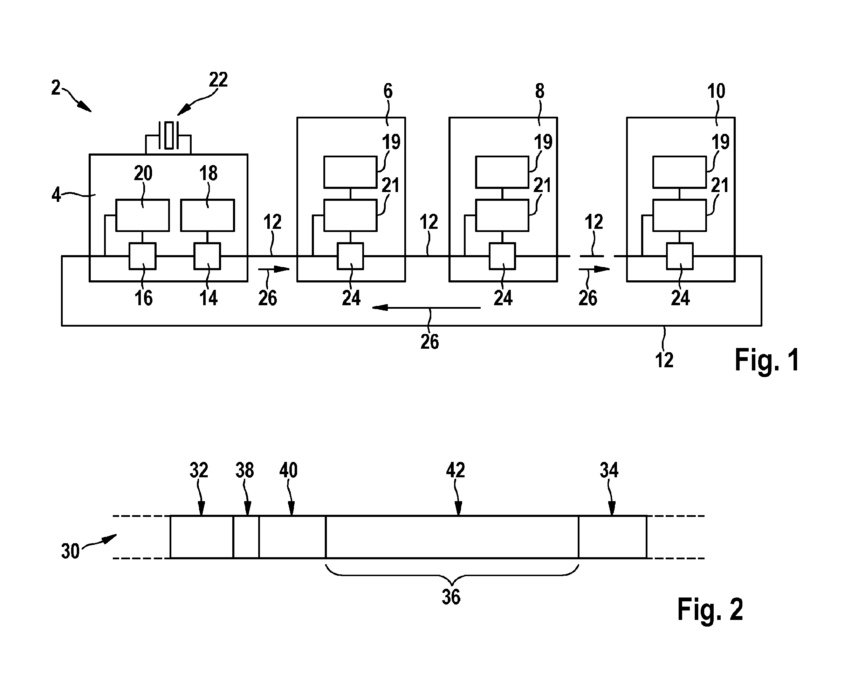

Die in Figur 1 schematisch dargestellte Ausführungsform einer Kommunikationsanordnung 2 ist ringförmig ausgebildet und umfasst mehrere in Serie hintereinander geschaltete Teilnehmer, nämlich einen Master 4, einen ersten Slave 6, einen zweiten Slave 8 sowie einen n-ten Slave 10, die über Abschnitte 12 einer Leitung miteinander verbunden sind. Weiterhin umfasst der Master eine erste digitale, serielle Schnittstelle 14 zum Versenden von Datenpaketen, mit der der Master 4 je nach Definition mit einem Anfang oder mit einem Ende der Leitung verbunden ist. Außerdem umfasst der Master 4 eine zweite digitale, serielle Schnittstelle 16 zum Empfangen von Datenpaketen, mit der der Master 4 je nach Definition mit einem Ende oder mit einem Anfang der Leitung verbunden ist. Die serielle erste Schnittstelle 14 ist dabei mit einer Systemuhr 18 verbunden. Die serielle zweite Schnittstelle 16 ist mit einem Modul zur Detektion der Phasenlage 20 (sog. Delay Locked Loop) verbunden. Weiterhin ist nur der Master 4 mit einem Quarzoszillator 22 verbunden.

Jeder der Slaves 6, 8, 10 weist eine als Slave-Schnittstelle 24 ausgebildete digitale, serielle Schnittstelle auf, die jeweils mit zwei Verbindungen 12 und somit einer Datenleitung verbunden ist. Somit existiert zwischen zwei Teilnehmern eine Verbindung. Außerdem ist jede serielle Slave-Schnittstelle 24 mit einem Taktrückgewinnungsmodul 21, aus dem ein lokaler Systemtakt 19 abgeleitet werden kann, verbunden.

Zur Bereitstellung einer Kommunikation zwischen den Teilnehmern der Kommunikationsanordnung 2 ist bei einer Ausgestaltung der Erfindung vorgesehen, dass ausgehend von der Anfangsschnittstelle 14 des Masters 4 über einen Bitstrom 26 Nachrichten als Datenpakete von serieller Slave-Schnittstelle 24 zu serieller Slave-Schnittstelle 24 der Slaves 6, 8, 10 kontinuierlich übertragen werden. Nachdem ein Datenpaket einen letzten Slave 6, 8, 10, hier den n-ten Slave 10, erreicht hat, wird das Datenpaket von der Slave-Schnittstelle 24 des letzten Slaves 10 zu der Endschnittstelle 16 des Masters 4 übermittelt.

Bei der Kommunikationsanordnung 2 in Ringtopologie sind mehrere Slaves 6, 8, 10, hier ASICs mit identischer lokaler Adresse jeweils über die digitale Slave-Schnittstelle 24 seriell an den hier als Mikrocontroller ausgebildeten Master 4 angeschlossen. Dabei verfügt in dieser Ausführungsform nur der Master 4 Kenntnis über die Position jedes Slaves 6, 8, 10 in der ringförmigen Kommunikationsanordnung 2.

In einer Ausgestaltung der Erfindung ist ein als Slave 6, 8, 10 ausgebildeter Teilnehmer bzw. Knoten der Kommunikationsanordnung in Ringtopologie derart ausgebildet, dass jeder Slave 6, 8, 10 einen Adresswert einer empfangenen Adresse, typischerweise einen Adresswert in einem Adressfeld eines Datenrahmens, der zur Übermittlung einer Nachricht an mindestens einen Slave vorgesehen ist, um einen festen Wert modifiziert und an den nächsten Teilnehmer weitergibt. Dabei kann der Adresswert bspw. um den festen Wert "1" subtrahiert werden. Eine derartige Änderung eines Adresswerts kann in Ausgestaltung auch für andere Datenpakete vorgenommen werden, dies ist auch dann möglich, wenn derartige Datenpakete kein Datenrahmen sondern nur einen Leerrahmen mit einer Nachricht umfassen.

Ein Kodierverfahren zur Rückgewinnung der Taktinformation aus einem Datensignal eines Datenpakets wird so vorgenommen, dass durch äquidistantes Einfügen eines Parity-Bits sichergestellt wird, dass innerhalb einer festgelegten Zeitdauer mindestens ein Flankenwechsel im Bitstrom 26 enthalten ist. Durch eine kontinuierliche Datenübertragung kann eine Synchronisation der Slaves 6, 8, 10 in der Kommunikationsanordnung 2 sichergestellt werden. Es können auch andere geeignete Kodierungsverfahren angewandt werden.

Das Datenpaket wird von dem Master 4 zu dem ersten Slave 6 und nacheinander von Slave 6 zu Slave 8 bis zu dem letzten Slave 10 und von dem letzten Slave 10 zu dem Master 4 übermittelt. Somit durchläuft das Datenpaket sämtlich Teilnehmer der Kommunikationsanordnung 2. Der Datenrahmen, mit dem an mindestens einen Slave 6, 8, 10 eine Nachricht zu übermitteln ist, weist ein Adressfeld mit einer Adresse auf. Es ist vorgesehen, dass jeder Slave einen Adresswert des empfangenen Datenrahmens mit der zu übermittelnden Nachricht um einen festen Wert, bspw. durch Subtraktion oder Addition, ändert und an einen nächsten Teilnehmer weitergibt. Hierbei wird der Adresswert von jedem Slave, je nach hierfür festgelegtem Algorithmus, in gleicher Weise verändert. Innerhalb der gezeigten Kommunikationsanordnung 2 weisen die Slaves 6, 8, 10 identische lokale Adressen auf. Außerdem ist in allen Slaves ein identischer Algorithmus für die Kommunikationsschnittstelle hinterlegt. Dabei ist typischerweise nur das Modul zur Interchip-Kommunikation identisch, ansonsten können die Teilnehmer sehr wohl unterschiedliche Funktionen beinhalten.

Die folgenden beschriebenen Daten- bzw. Leerrahmen stellen nur beispielhafte Ausgestaltungen dar. Es ist möglich, weitere Bits zwischen den Datenblöcken zu positionieren oder auch die Anordnung der Blöcke innerhalb eines Datenrahmens zu vertauschen.

Ein in Figur 2 dargestelltes Beispiel für ein Datenpaket 30, das bei einer Ausführungsform des erfindungsgemäßen Verfahrens übertragen wird, umfasst an einem Anfang ein erstes Interframe-Symbol (IFS bzw. Zwischenrahmensymbol 32), und am Ende ein zweites Zwischendatensymbol 34. Zwischen diesen beiden Zwischenrahmensymbolen 32, 34, die typischerweise identisch sind, ist innerhalb des Datenpakets 30 ein Datenrahmen 36 angeordnet. Zu Beginn des Datenrahmens 36 weist dieser direkt nach dem ersten Zwischenrahmensymbol 32 ein Reservierungszeichen 38 auf, das darüber Auskunft gibt, welche Art von Datenpaket 30 sich im Umlauf befindet. In Figur 2 ist in Ausgestaltung vorgesehen, dass das Reservierungszeichen 38 bspw. den Wert "0" aufweist und somit der Rahmen als Datenrahmen 36 ausgebildet ist. Nach dem Reservierungszeichen 38 umfasst der Datenrahmen 36 ein Adressfeld 40 mit einem Adresswert für eine Adresse. Weiterhin umfasst der Datenrahmen 36 eine eigentliche Nachricht 42, die Anweisungen sowie Daten, die hier als Nutzdaten ausgebildet sind, und auch weitere Prüfsummen und Paritätsbits umfassen kann.

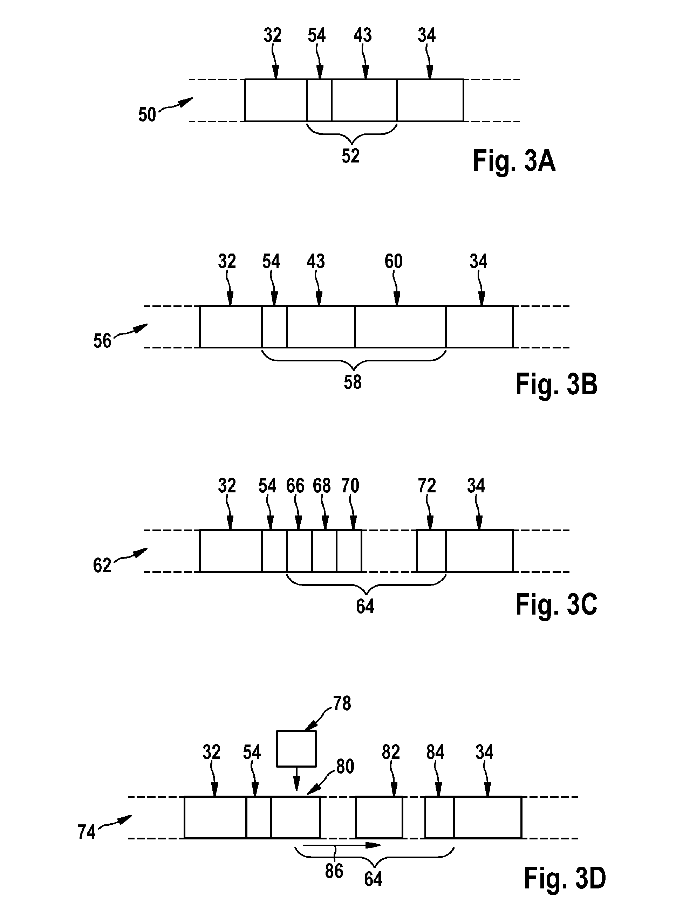

Figur 3a zeigt in schematischer Darstellung ein weiteres Beispiel eines Datenpakets 50, das hier eine erste Variante eines als Leerrahmen 52 ausgebildeten Frames aufweist. Auch dieses Datenpaket 50 fängt mit einem ersten Zwischenrahmensymbol 32 an und endet mit einem zweiten Zwischenrahmensymbol 34. Zwischen den beiden Zwischenrahmensymbolen 32, 34 befindet sich der Leerrahmen 52, bei dem ein Reservierungszeichen 54 im Gegensatz zu dem ersten Datenpaket 30 mit dem Datenrahmen 36 den Wert "1" aufweist und somit den Rahmen als Leerrahmen 52 klassifiziert. Weiterhin umfasst dieser Leerrahmen 52 ebenfalls einen Adressfeld 43 mit einem Adresswert. Allerdings weist die hier gezeigte Ausführungsform des Leerrahmens 52 und somit das Datenpaket 50 keine Nachricht und somit keine Nutzdaten auf.

Mit Datenpaketen 50, wie in Figur 3a dargestellt, versendet der Master kontinuierlich Leerrahmen 52 zur Durchführung eines Pollings an die Slaves. Jeder Slave kann in ein derartiges Datenpaket 50 Daten einfügen und/oder wenigstens eine Anforderung ("Soft-Interrupt") an den Master senden. Dies erfolgt typischerweise in der Form, dass der Slave das Reservierungszeichen 54, üblicherweise ein Reservierungsbit, invertiert und den Adresswert auf "111...1" setzt. Durch das Aktivieren des Reservierungszeichens 54 ist der Rahmen nun für die nachfolgenden Teilnehmer entsprechend eines Datenrahmens gesperrt. Ferner modifiziert jeder nachfolgende Teilnehmer den Adresswert um einen festen Datenwert, entsprechend dem Vorgehen im Falle eines Datenrahmens aus Figur 2. Das Datenpaket 50 wird folglich bis zum Master durchgereicht, wobei dieser anhand der Adressinformation rückrechnen kann, welcher Slave eine Unterbrechungsanfrage gestellt hat.

Das in Figur 3b schematisch dargestellte dritte Beispiel eines Datenpakets 56 umfasst ebenfalls ein erstes Zwischenrahmensymbol 32 und am Ende ein zweites Zwischenrahmensymbol 34. Weiterhin umfasst dieses Datenpaket 56 einen Rahmen, der hier als zweite Variante eines Leerrahmens 58 ausgebildet ist. Dieser Leerrahmen 58 umfasst ein Reservierungszeichen 54 mit dem Wert "1 ", das dieses Frame als Leerrahmen 58 definiert. Weiterhin umfasst der Leerrahmen 58 ein Adressfeld 43 mit einem Adresswert sowie eine Nachricht 60, die hier als Nutzdaten ausgebildete Daten umfasst.

Dieser Leerrahmen 58 kann von einem Slave mit Daten zur Information des Masters belegt werden, wobei das Reservierungszeichen 54 gesetzt ist. Der Adresswert einer Adresse des Adressfelds 43 im Leerrahmen 58 wird auf einen maximalen Wert "111....1" gesetzt. Dies kann derart erfolgen, dass der Adresswert im Leerrahmen 58 vom Slave auf "111...1" gesetzt wird und durch Subtraktion bzw. Addition der Adresse im Adressfeld des Datenrahmens in jedem nachfolgenden Slave an den Master übermittelt wird. Das Setzen der Adresse auf den Wert "111...1" kann bspw. durch eine ODER-Verknüpfung erfolgen, indem sämtliche Adressbits mit einer "1" überschrieben werden. wobei das Adressfeld 43 des Leerrahmens 58 Zufallsdaten enthalten kann. Über die Nachricht wird dem Slave die direkte Übertragung von Nutzdaten, die eine durch den Leerrahmen 58 vorgegebene Datenlänge nicht überschreitet, ermöglicht. Die Anzahl der vorgenommenen Modifikationen des gesetzten Adresswerts der Adresse entspricht der Anzahl der nachfolgenden Slaves. Somit kann durch den Master ermittelt werden, welcher Slave den Leerrahmen 58 mit Daten belegt und das Adressfeld 43 neu gesetzt hat.

Das in Figur 3c gezeigte vierte Beispiel eines Datenpakets 62 umfasst neben dem ersten Zwischenrahmensymbol 32 und dem zweiten Zwischenrahmensymbol 34 einen als Leerrahmen 64 ausgebildeten Rahmen, der hier als dritte Variante eines Leerrahmens 64 ausgebildet ist. Auch in diesem Fall wird die Art des Rahmens durch ein Reservierungszeichen 54, das hier den Wert "1" aufweist, als Leerrahmen 64 definiert. Weiterhin umfasst der Leerrahmen 64 als weiteres Bit ein erstes Unterbrechungsbit 66, das einem ersten Slave zugeordnet ist, ein zweites Unterbrechungsbit 68, das einem zweiten Slave zugeordnet ist, ein drittes Unterbrechungsbit 70, das einem dritten Slave zugeordnet ist, sowie ein n-tes Unterbrechungsbit 72, das einem n-ten Slave zugeordnet ist.

Demnach folgt in dem Datenpaket 62 nach dem Zwischenrahmensymbol 32 und dem Reservierungszeichen 54 für jeden Slave der Kommunikationsanordnung das als Unterbrechungsbit 66, 68, 70, 72 ausgebildete Bit. Falls durch einen Slave ein Interrupt ausgelöst werden soll, wird durch diesen Slave das ihm zugeordnete Unterbrechungsbit 66, 68, 70, 72 ausgelöst. Bei dieser Ausgestaltung entspricht eine Reihenfolge der Unterbrechungsbits 66, 68, 70, 72 einer Reihenfolge der Slaves entlang der Kommunikationsanordnung, wobei die Reihenfolge der Unterbrechungsbits nicht zwingend an die Reihenfolge entlang der Kommunikationsanordnung gebunden sein muss.

Die in Figur 3d gezeigte Ausführungsform für ein fünftes Beispiel eines Datenpakets 74 beginnt ebenfalls mit einem ersten Zwischenrahmensymbol 32 und endet mit einem zweiten Zwischenrahmensymbol 34. Weiterhin umfasst das Datenpaket ein Reservierungszeichen 54, das hier einen Wert "1" aufweist, das einen Rahmen dieses Datenpakets 74 als einen Leerrahmen 76 definiert. Außerdem umfasst der Leerrahmen 76 als weitere Bits eine variable Anzahl an Unterbrechungsbits 80, 82, 84, nämlich ein n-1-tes Unterbrechungsbit 80 für einen n-1-ten Slave und ein erstes Unterbrechungsbit 82 für einen ersten Slave einer Kommunikationsanordnung. Außerdem zeigt Figur 3d ein zusätzliches einzufügendes n-tes Unterbrechungsbit 78 für einen n-ten Slave. Weiterhin umfasst diese Variante des Leerrahmens ein x-tes Unterbrechungsbit 84.

Eine Verschiebung der Unterbrechungsbits 80, 82, 84 innerhalb des Leerrahmens 76 nach Einfügen des n-ten Unterbrechungsbits 78 durch einen n-ten Slave in den Leerrahmen 76 ist hier durch einen Pfeil 86 angedeutet. Somit kann innerhalb des Leerrahmens 76 eine Reihenfolge der Unterbrechungsbits 78, 80, 82, 84 nach dem Reservierungszeichen 54 von jedem Slave um eine Position verschoben und ein neues Unterbrechungsbit 78 eingefügt werden. Der von dem Master ursprünglich versendete Leerrahmen 76 umfasst keine Nutzdaten. Eine Anzahl der vorgehaltenen Unterbrechungsbits 78, 80, 82, 84 ist größer oder gleich der Anzahl der interruptfähigen Slaves in der Kommunikationsanordnung. Sofern ein Interrupt auszulösen ist, kann dieser durch das von dem n-ten Slave eingefügte n-te Unterbrechungsbit 78 gesetzt werden. Sofern kein Interrupt ausgelöst werden soll, wird ebenfalls ein Bit eingefügt, jedoch ist dies dann nicht gesetzt. Prinzipiell könnte die Anzahl der vorgehaltenen Unterbrechungsbits auch kleiner als die Anzahl der Slaves in der Kommunikationsanordnung ausgeführt sein, allerdings ist dann nicht jeder Slave in der Lage ein Unterbrechungsbit zu setzen. In diesem Fall müssen die Kommunikationsmodule der angeschlossenen Slave unterschiedlich ausgeführt oder mindestens unterschiedlich konfiguriert werden, was keiner Vorzugslösung entspricht.

Die in den Figuren 2, 3a und 3b gezeigten Ausführungsformen für Datenpakete 30, 50, 56 weisen jeweils einen Adressfeld 40, 43 auf, über dessen Struktur, üblicherweise einer Struktur des Adresswerts, ein Datenpaket 30, 50, 56 von dem Master 4 an einen i-ten Slave 6, 8, 10 oder vom i-ten Slave 6, 8, 10 an den Master 4 der in Figur 1 dargestellten Ausführungsform der Kommunikationsanordnung 2 adressiert werden kann.

Die genannte Struktur des Adressfelds 40, 43 weist in einer Ausgestaltung N Bits auf. Der maximale binäre Zahlenwert, der mit den N Bits darstellbar ist, muss größer gleich der Anzahl an Teilnehmern, typischerweise größer gleich der Anzahl n der Slaves 6, 8, 10 sein. In einer Ausführungsform des erfindungsgemä-βen Verfahrens ist vorgesehen, dass ein versendetes Datenpaket 30, 50, 56 an den i-ten Slave 6, 8, 10 gerichtet ist, wobei von dem Master 4 das Adressfeld mit der binären Zahl i belegt wird.

Dieses Datenpaket 30, 50, 56 wird von dem Master 4 zu den Slaves 6, 8, 10 gesendet, wobei jeder Slave 6, 8, 10 bis zum i-ten Slave 6, 8, 10, den das Datenpaket durchläuft, den Adresswert im Adressfeld des Datenrahmens um einen festen Wert, bspw. um den Wert "1 ", modifiziert, bspw. subtrahiert. Sofern es zu keinem Überlauf bei der Subtraktion kommt, war der Adresswert ungleich "00...0" und dadurch wird dem überprüfenden Slave 6, 8, 10 signalisiert, dass das Datenpaket 30, 50, 56 nicht für ihn bestimmt ist. Sobald der i-te Slave 6, 8, 10 erreicht ist, kommt es zu dem besagten Überlauf und der i-te Slave 6, 8, 10 erkennt, dass der empfangene Datenrahmen bearbeitet werden kann, d. h. in der Regel, dass der Inhalt des Datenpakets 30, 50, 56, z. B. eine Nachricht 42, 60, für diesen i-ten Slave 6, 8, 10 bestimmt ist.

In einer alternativen Ausgestaltung der Schnittstelle weist der Adresswert in einer Ausgestaltung n Bits auf. Somit ist für jeden der n Slaves 6, 8, 10 ein Bit des Adresswerts vorgesehen. Falls bei einer Ausführungsform des erfindungsgemäßen Verfahrens vorgesehen ist, dass ein versendetes Datenpaket 30, 50, 56 an den i-ten Slave 6, 8, 10 gerichtet ist, werden von dem Master 4 die i niedrigwertigsten Bits des Adresswerts jeweils gesetzt, die n-i höchstwertigsten Bits werden nicht gesetzt. Alternativ können auch die i höchstwertigen Bits gesetzt und die n-i niedrigwertigsten Bits nicht gesetzt werden.

Dieses Datenpaket 30, 50, 56 wird von dem Master 4 zu den Slaves 6, 8, 10 gesendet, wobei jeder Slave 6, 8, 10 bis zum i-ten Slave 6, 8, 10, den das Datenpaket 30, 50, 56 durchläuft, jeweils ein gesetztes Bit löscht und somit modifiziert. Beim Eintreffen des Datenrahmens 36 beim i-te Slave 6, 8, 10 sind alle Bits gelöscht, d. h. nicht gesetzt, und somit wird dem i-ten Slave 6, 8, 10 signalisiert, dass das Datenpakt 30, 50, 56, in der Regel der Inhalt des Datenpakets 30, 50, 56, z. B. eine Nachricht 42, 60, für diesen i-ten Slave 6, 8, 10 bestimmt ist.

Demnach erzeugt der i-te Slave 6, 8, 10, für den das Datenpaket 30, 50, 56 vorgesehen oder bestimmt ist, für den Adresswert einen Überlauf. Durch den Überlauf und/oder eine Struktur des Adresswerts, die durch den Überlauf erzeugt wird, wird dem i-ten Slave 6, 8, 10 signalisiert, dass das Datenpaket 30, 50, 56 an ihn gerichtet ist. Vor einer Weiterleitung des Datenpakets 30, 50, 56 an einen nachfolgenden Teilnehmer der Kommunikationsanordnung, d. h. mindestens einen Slave 6, 8, 10 oder ggf. den Master 4, werden von diesem i-ten Slave 6, 8, 10 alle N Bits des Adresswerts des Adressfelds 40, 43 auf denselben Wert gesetzt, bspw. alle Bits auf "1" oder alle Bits auf "0". Die nachfolgenden n-i Slaves 6, 8, 10 modifizieren den neu gesetzten Adresswert des Adressfelds 40, 43 genauso wie die anderen i Slaves 6, 8, 10, die das Datenpaket 30, 50, 56 bereits erhalten haben. Somit wird der neu gesetzte Adresswert n-i-mal modifiziert. Der Master 4, der dieses Datenpaket 30, 50, 56 wieder erhält, kann aufgrund der Struktur des Adresswerts, d. h. anhand der Anzahl der modifizierten Bits, erkennen, dass dieser n-i-mal modifiziert wurde. Dadurch wird dem Master 4 angezeigt, dass das Datenpaket 30, 50, 56 von dem i-ten Slave 6, 8, 10 bearbeitet wurde.

Falls ein i-ter Slave 6, 8, 10 einen Leerrahmen 52, 58 eines Datenpakets 50, 56 mit Informationen für den Master 4 belegt, setzt dieser i-te Slave 6, 8, 10 den Adresswert des Adressfelds 43 ebenfalls neu. Auch in diesem Fall kann der Master 4, sobald er das Datenpaket 50, 56 mit der für ihn vorgesehenen Information erhält, anhand der Struktur des Adresswerts erkennen, dass dieses von den n-i nachfolgenden Slaves 6, 8, 10 n-i-mal modifiziert wurde, und dass die Information von dem i-ten Slave 6, 8, 10 stammt.

Das Reservierungszeichen 38, 54, das auch als Berechtigungszeichen bezeichnet werden kann, definiert, ob ein Datenpaket 30, 50, 56, 62, 74 einen Datenrahmen 36 (Reservierungszeichen = "0") oder einen Leerrahmen 52, 58, 64,76 (Reservierungszeichen = "1 ") aufweist. Je nach Definition, kann der Bitwert des Reservierungszeichens 38, 54 auch vertauscht sein. Es ist möglich, ein gesetztes bzw. nicht-gesetztes Reservierungszeichen 38, 54 als belegtes bzw. freies Berechtigungszeichen zu betrachten.

Die Kommunikationsanordnung 2 aus Figur 1 kann in einem Kraftfahrzeug zur Übertragung von Datenpaketen 30, 50, 56, 62, 74 zwischen einem Mikrocontroller und ASICs in einem Steuergerät des Kraftfahrzeugs ausgebildet sein, wobei das Steuergerät die Teilnehmer der Kommunikationsanordnung 2 aufweist.

Ein Protokoll zur Prioritätssteuerung der Kommunikationsanordnung ist so ausgeführt, dass jeder Slave eine Anforderung ("Soft-Interrupt") an den Master übertragen kann, was hier anhand der Figur 3a, 3b, 3c und 3d beschrieben ist. So ist in jedem Slave ein identischer Algorithmus der Kommunikationsschnittstelle hinterlegt und der Master kann aufgrund der Kenntnis der Position der als Slaves ausgebildeten Teilnehmer die Interrupts entsprechend zuordnen und gemäß einer gewünschten Priorisierung, im Falle der möglichen Übertragung von mehreren Unterbrechungsanfragen in einem Datenpaket entsprechend Figur 3c und 3d, verarbeiten. Mit einem Protokoll zur Prioritätssteuerung kann von mindestens einem Slave über ein Datenpaket, das einen Leerrahmen umfasst, eine Anforderung an den Master übertragen werden.

Eine Kodierung zur Rückgewinnung einer Taktinformation aus einem Signal kann derart erfolgen, dass ein Paritätsbit äquidistant in den Datenrahmen eingefügt wird, so dass der übertragene Bitstrom innerhalb einer festgelegten Zeitdauer mindestens einen Flankenwechsel aufweist.

Um im Ruhezustand des Masters Informationen von den Slaves empfangen zu können, versendet der Master kontinuierlich Leerrahmen, um eine Abfrage (Polling) der Slaves auszuführen. Jeder Slave kann einen Leerrahmen mit Daten belegen und diese und/oder wenigstens eine Anforderung als sog. "Soft-Interrupt" und somit als Unterbrechung der Software, bspw. von einem Second-Level Interrupt Handler (SLIH), d. h. einem Steuerungsprogramm für eine Unterbrechung einer zweiten Schicht nach dem OSI-Schichtenmodell an den Master als Antwort auf die Abfrage übertragen.

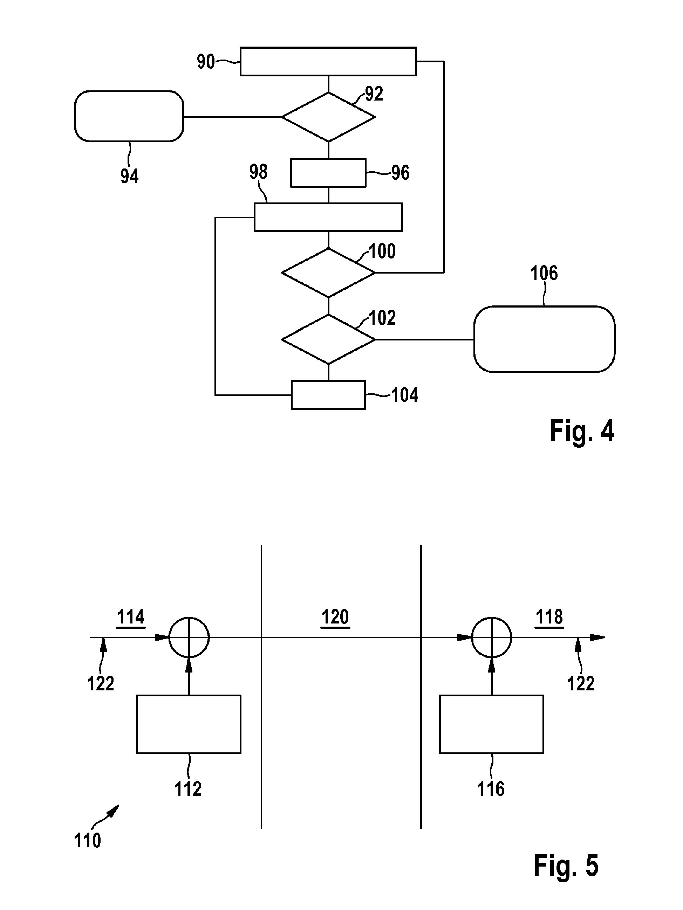

Das in Figur 4 gezeigte Flussdiagramm zeigt ein Beispiel einer Verarbeitung eines Adresswerts einer Adresse im Adressfeld eines Datenrahmens, das von einem Master gesendet wird, durch n Slaves als Teilnehmer innerhalb einer bspw. ringförmigen Kommunikationsanordnung bei einer weiteren Ausführungsform des erfindungsgemäßen Verfahrens. Dabei erfolgt eine Realisierung der Adressierung bei der Datenübertragung innerhalb jedes Slaves im Ring.

Weiterhin wird durch eine Detektion 90 des Zwischenrahmensymbols ein Empfang eines ankommenden Datenpakets nachgewiesen. Danach wird bei einer Prüfung 92 überprüft, ob ein Reservierungszeichen eines Frames des Datenpakets entweder den Wert 0 oder 1 aufweist.

Falls das Reservierungszeichen nicht gesetzt ist, umfasst das empfangene Datenpaket eine Variante eines Leerrahmens. In diesem Fall kann durch einen i-ten Slave bei Bedarf ein Interrupt 94 und somit eine Anforderung und/oder eine Anfrage an den Master ausgelöst werden. Somit ergibt sich dem i-ten Slave die Möglichkeit, das empfangene Datenpaket mit einer Nachricht zu belegen, die an den Master weitergeleitet wird.

Anderenfalls ist das Reservierungszeichen gesetzt, so dass das Datenpaket einen Datenrahmen umfasst. In diesem Fall erfolgt eine Bearbeitung bzw. Modifikation des Adressfelds. Dieser Adresswert ADDR [1...N] weist in dieser Ausgestaltung N Bits bzw. Stellen auf. Dabei entspricht die maximale binäre Zahl bestehend aus N Bits mindestens der Anzahl n der Slaves in der Kommunikationsanordnung.

Zur Modifikation des Adressfeld wird in Schritt 96 eine Variable i mit dem Wert "1" belegt.

Danach erfolgt eine Invertierung 98 des ersten Adressbits ADDR[1] des Adressfelds ADDR [1..N] eines empfangenen Datenrahmens. Aufgrund der Übertragung der Adresse mit Beginn des niederwertigsten Bits, entspricht die Invertierung der ADDR[1] der Subtraktion "1" vom Adresswert.

Im nächsten Schritt 100 der Bearbeitung wird das Ergebnis der Invertierung 98 auf den Wert "1" überprüft. Sofern der Wert ADDR[1] nicht "1" ist, d. h. der Wert ist "0", kam es zu keinem Überlauf bei der Subtraktion. In diesem Fall schiebt der Slave das Datenpaket mit der nun modifizierten Adresse an den nächsten i+1-ten Slave weiter. Da im weiteren keine Bearbeitung durch den Slave erforderlich ist, wartet dieser entsprechend des Verfahrens auf die erneute Detektion 90 eines Zwischenrahmensymbols und schiebt die zwischenzeitlich empfangenen Bits unverändert weiter.

Falls sich bei der Überprüfung in Schritt 100 herausstellt, dass ADDR[1] den Wert "1" hat, kam es zu einem Überlauf bei der Subtraktion. Nun muss der Slave in Schritt 102 prüfen, ob bereits das komplette Adressfeld der Länge N durchlaufen wurde. Sofern dies nicht der Fall ist, wird die Variable i um den Wert "1" erhöht (Schritt 104). Anschließend erfolgt eine Invertierung 98 des nächsthöherwertigen Bits.

Die Schleife wird solange für die nachfolgenden Bits des Adressfelds durchlaufen, bis ein invertiertes Adressbit eine "0" ergibt. Sofern es nun zu keinem Überlauf gekommen ist, d. h. das komplette Adressfeld noch nicht durchlaufen wurde, wird dem Slave signalisiert, dass das empfangene Datenpaket nicht für ihn bestimmt war und dieser verzweigt zurück in Schritt 90 und wartet auf das nächste eingehende Zwischenrahmensymbol, um mit der möglichen Bearbeitung des nächsten Datenpakets fortzufahren. Sofern es aber zu einem Überlauf kommt und alle Stellen des Adressfelds somit gesetzt sind, d. h. eine "11...1" aufweisen, wird dem Slave damit signalisiert, dass das Datenpaket für ihn bestimmt ist und bearbeitet werden muss. In diesem Fall greift die Abfrage in Schritt 102, wonach die Variable i nun dem Wert 2^{N}-1 (maximal darstellbarer Wert aus N Bits) entspricht, wonach nun alle Bits des Adressfelds invertiert wurden. Ergebnis der Auswertung des Adressfelds ist nun Schritt 106, in dem ermittelt wird, dass der Rahmen des empfangenen Datenpakets 30 ein Datenframe 36 ist und für den i-ten Slave, der diesen Datenframe 36 innerhalb des Datenpakets 30 empfängt, bestimmt ist. Nachfolgend erfolgt durch den i-ten Slave eine Auswertung der Anweisungen innerhalb der Nachricht 42 sowie eine Verarbeitung der Daten der Nachricht 42.

Die in dem Flussdiagramm gezeigten Schritte können bspw. durch einen Zähler, einen Inverter und mit Vergleichern als Komponenten einer Schnittstelle eines Slaves und/oder des Slaves erfolgen. In der gezeigten Ausführungsform des Verfahrens wurde der Subtrahend mit "1" gesetzt. Es sind üblicherweise auch andere Umsetzungen der Subtraktion oder Addition und somit für Modifikationen der Adresse mit anderen festen Werten möglich.

Figur 5 zeigt ein Blockschaltbild für eine Ausführungsform eines blocksynchronisierten Verwürflers 110. Dieser umfasst einen ersten m-Sequenz-Generator 112, der im Master 114 (µC) als sendendem Teilnehmer angeordnet ist, und n m-Sequenz-Generatoren 116, wobei hier nur ein i-ter m-Sequenz-Generator in einem i-ten Slave 118 (ASIC) dargestellt ist. Zwischen dem Master 114 und den n Slaves 118 erfolgt eine kodierte Übertragung 120 von Datenpaketen innerhalb eines Bitstroms 122. In diesem Fall kann die Übertragungsstrecke 120 weitere Teilnehmer beinhalten. Ferner ist es auch möglich, dass in jedem Slave die Botschaft zunächst über einen m-Sequenz-Generator 116 dekodiert und anschlie-βend mit einem weiteren, möglicherweise unterschiedlichen, m-Sequenz-Generator 112, neu kodiert wird, d. h. jeweils die Übertragungsstrecke 120 zwischen zwei Teilnehmern ist kodiert. In diesem Fall beinhaltet die Übertragungsstrecke 120 keine weiteren Teilnehmer. Weiter ist es auch möglich, dass nur ausgewählte Teile des Bitstroms, typischerweise die Nutzdaten, verwürfelt werden.

Neben den bereits erwähnten Möglichkeiten der spektralen Spreizung gibt es die Option, den blocksynchronisierten Verwürfler 110 zu verwenden. Beim blocksynchronisierten Verwürfler 110 wird zu den Daten im sendenden Teilnehmer, hier dem Master 114, und dem empfangenden Teilnehmer, hier dem i-ten Slave 118, gleichzeitig dieselbe m-Sequenz modulo-2-addiert und demnach ein Rest einer Division durch 2 addiert.

Üblicherweise kann es bei einer Synchronisation der m-Sequenzen von blocksynchronisierten Verwürflern 110 in einem sendenden und einem empfangenden Teilnehmer bei einem kontinuierlichen Bitstrom zu Folgefehlern über alle Botschaften hinweg kommen. Um dem Abhilfe zu schaffen, wird im Rahmen der Erfindung eine Synchronisation durch den Zwischenrahmensymbole genutzt. Bei einer Auslegung des blocksynchronisierten Verwürflers 110 ist vorgesehen, dass der Bitstrom der Datenpakete nicht der m-Sequenz entspricht. Weiterhin kann ermöglicht werden, dass am Ausgang der modulo-2-Addition des Bitstroms mit der m-Sequenz keine Zwischenrahmensymbole erzeugt werden. Mittels dieser Kodierung ist es auch möglich, die Frames, üblicherweise Leerrahmen, an einzelne Teilnehmer zu kodieren, während andere, evtl. kostengünstige Teilnehmer oder Teilnehmer mit geringen Framelängen, keine Kodierung zur spektralen Spreizung umfassen. Es ist weiterhin eine Kombination diverser Kodierungen möglich.

Mit dem Verfahren ist in einer Ausgestaltung der Erfindung eine Übertragung von Daten zwischen Teilnehmern einer seriellen, ringförmigen Kommunikationsanordnung 2 möglich. In dieser Kommunikationsanordnung 2 sind die Teilnehmer miteinander seriell verbunden sind, wobei ein Datenpaket 30, 50, 56, 62, 74 von einem als Master 4 ausgebildeten Teilnehmer an weitere Teilnehmer, die als Slaves 6, 8, 10 ausgebildet sind, übermittelt wird, wobei das Datenpaket 30, 50, 56, 62, 74 von Slave 6, 8, 10 zu Slave 6, 8, 10 übermittelt wird. Ein Inhalt des Datenpakets 30, 50, 56, 62, 74 umfasst eine Adressinformation. Diese Adressinformation kann in einem Adressfeld 40, 43 des Datenpakets 30, 50, 56, 62, 74 angeordnet und als Adresswert ausgebildet sein. Bei der Ausgestaltung des Verfahrens wird von jedem Slave 6, 8, 10 der Adresswert und somit die Adressinformation des empfangenen Datenpakets 30, 50, 56, 62, 74 bspw. um einen festen Wert geändert.

Hierbei ist vorgesehen, dass die Position des Adressfelds 40, 43 innerhalb eines Datenpakets 30, 50, 56, 62, 74 beliebig sein kann. Demnach erfolgt durch einen Slave 6, 8, 10 eine Modifikation eines Datenpakets 30, 50, 56, 62, 74. Jeder Slave 6, 8, 10 ändert einen Adresswert und somit die Adressinformation innerhalb eines Datenpakets 30, 50, 56, 62, 74 gleichartig, wobei von jeden Slave 6, 8, 10 dieselbe mathematische Operation, üblicherweise eine Addition oder Subtraktion, durchgeführt wird. Außerdem weisen alle Slaves 6, 8, 10 in Ausgestaltung der Erfindung dieselbe, identische Adresse auf.

## Patentansprüche

1. Verfahren zum Übertragen von Daten zwischen Teilnehmern einer seriellen, ringförmigen Kommunikationsanordnung (2), in der die Teilnehmer miteinander seriell verbunden sind, wobei ein Datenpaket (30, 50, 56, 62, 74) von einem als Master (4) ausgebildeten Teilnehmer an weitere Teilnehmer, die als Slaves (6, 8, 10) ausgebildet sind, übermittelt wird, **dadurch gekennzeichnet, dass** ein Protokoll zur Prioritätssteuerung vorgesehen ist, mit dem mindestens ein Slave (6, 8, 10) über ein Datenpaket (30, 50, 56, 62, 74) eine Anforderung an den Master (4) überträgt.

2. Verfahren nach Anspruch 1, bei dem eine Priorisierung des mindestens einen Slaves anhand einer Position des Slaves in der Kommunikationsanordnung erfolgt.

3. Verfahren nach Anspruch 2, bei dem der mindestens eine Slave die Anforderung an den Master über Setzen eines dem mindestens einen Slave zugeordneten Interrupt-Bits überträgt.

4. Verfahren nach Anspruch 3, bei dem zwischen einem Zwischenrahmensymbol und einem Reservierungszeichen des Datenpakets eine mindestens einer Anzahl der Slaves, insbesondere einer Anzahl von Slaves, welche einen Interrupt auslösen können, entsprechende Anzahl an Interrupt-Bits vorgesehen ist.

5. Verfahren nach einem der voranstehenden Ansprüche, bei dem die Daten kontinuierlich übertragen werden, und bei dem das Datenpaket (30, 50, 56, 62, 74) mit einem Adressfeld (40, 43) Nutzdaten, die für einen Slave (6, 8, 10) vorgesehen sind, umfasst.

6. Kommunikationsanordnung, die ringförmig ausgebildet ist und eine Anzahl Teilnehmer aufweist, die miteinander seriell verbunden sind, wobei ein Teilnehmer als Master (4) und weitere Teilnehmer als Slaves (6, 8, 10) ausgebildet sind, wobei der Master (4) dazu ausgebildet ist, das Datenpaket (30, 50, 56, 62, 74) an die Slaves (6, 8, 10) zu übermitteln, **dadurch gekennzeichnet, dass** ein Protokoll zur Prioritätssteuerung vorgesehen ist, mit dem mindestens ein Slave (6, 8, 10) über ein Datenpaket (30, 50, 56, 62, 74) eine Anforderung an den Master (4) überträgt.

7. Kommunikationsanordnung nach Anspruch 6, bei dem jeder Teilnehmer mindestens eine serielle Schnittstelle aufweist, mit der der Teilnehmer über eine Kommunikationsverbindung mit einer seriellen Schnittstelle mit einem benachbarten Teilnehmer der Kommunikationsanordnung (2) verbunden ist.
